# EUROPÄISCHE PATENTANMELDUNG

(11) **EP 2 314 475 A2**
(43) Veröffentlichungstag der Anmeldung: **27.04.2011**
(21) Anmeldenummer: 10466026.1
(22) Anmeldetag: 20.10.2010
(51) Int. Cl.: B60N 2/46

(54) **Verstellbare Armlehne**

(30) Priorität: 21.10.2009 CZ 20090693
(71) Anmelder: Skoda Auto A.S., 293 60 Mladá Boleslav (CZ)
(72) Erfinder: Horvát, Ivo, 29360 Mladá Boleslav (CZ); Sedivý, Martin, 53003 Pardubice (CZ); Benes, VIt, 46001 Liberec (CZ)

(57) **Zusammenfassung**

Die verstellbare Armlehne umfasst einen Kunststoffträger (1) mit Tragösen (2,3), in denen schwenkbar die Welle (8) mit Arretierungsmechanismus (9) gelagert ist, wobei auf der Welle (8) ein Arm (10) mit verschiebbar gelagertem Polster (12) angebracht ist. Das Arretierungsmechanismus (9) umfasst einen Mitnehmer (15), der fest mit der Welle (8) verbunden ist, wo der Mitnehmer (15) schwenkbar in einem Sperrrad (6) mit Innenverzahnung (7) gelagert ist, zu dem ein drehbar gelagerter Betätigungsring (36) mit Schlitz (37) anliegt. Der Mitnehmer weist eine Aussparung (17) auf, in der schwenkbar auf einem festen Bolzen (18) eine Raste (19) mit Außenverzahnung (20) und einem Raststift (46) gelagert ist, der im Schlitz (37) des Betätigungsrings (36) geführt wird. Durch Zusammenwirken einzelner Teile des Arretierungsmechanismus (9) kann die verstellbare Armlehne in die gewünschte Höhenposition eingestellt werden.

## Beschreibung

### Technisches Gebiet

Die Erfindung betrifft eine verstellbare Armlehne, insbesondere eine Armlehne im innenraum der Kraftfahrzeuge.

### Bisheriger Stand der Technik

Derzeit werden im Interieur der Kraftfahrzeuge Armlehnen verwendet, welche den Reisekomfort der Insassen steigern. Sie sind sowohl bei Hintersitzen, wie auch bei Vordersitzen bzw. zwischen den Sitzen eingebaut. Die zwischen den Vordersitzen angeordneten Armlehnen sind Bestandteil der Mittelkonsole und können einerseits für eine Schubbewegung in der Richtung der Fahrzeuglängsachse und anderseits für eine Schwenkbewegung ausgestaltet sein, falls aus beliebigem Grund ein Raum zwischen den Vordersitzen geschafft werden soll und eine Anpassung der Position an die individuellen Bedürfnisse der Insassen benötigt wird. Um auch den individuellen Wünschen der Insassen an Vordersitzen entgegenzukommen, insbesondere des Fahrers, sind so verstellbare Lehnen mit verschiedenen Mechanismen ausgestattet, welche derer Arretierung in gewünschter Stellung ermöglichen. Zur Arretierung werden verschiedene Arten von Mechanismen verwendet, welche eine feste, konstante Stellung des Schwenkgliedes gegenüber dem festen Grundkörper sichern. Bekannt sind Sperrradmechanismen, wo das verzahnte Sperrrad in ein verzahntes Segment einrastet, sowie Systeme mit der Nutzung der Bremswirkung wie Bandbremsen eventuell Bremsbacken. Deren Nachteil ist die relativ erhebliche Kompliziertheit und dementsprechender Preisaufwand.

### Darstellung der Erfindung

Die angeführten Nachteile werden durch eine verstellbare Armlehne gelöst, die einen Träger mit offener und geschlossener Tragöse umfasst, in denen eine Welle mit Arretierungsmechanismus gelagert ist, wobei an der Welle ein Arm mit verschiebbar gelagertem Polster angebracht ist. Das Arretierungsmechanismus umfasst einen Mitnehmer, der fest mit der Welle verbunden und schwenkbar im Sperrrad mit Innenverzahnung gelagert ist, zu dem ein schwenkbar gelagerter Betätigungsring anliegt. Der Mitnehmer weist eine Aussparung auf, in der auf einem festen Bolzen schwenkbar eine Raste mit Außenverzahnung gelagert ist. Der Betätigungsring weist einen Schlitz auf, der durch eine Radialnut und einen schrägen Anlauf ausgebildet wird. Im Träger ist eine Winkelaussparung ausgebildet, die durch die vordere Endfläche und die hintere Endfläche abgegrenzt ist. Der Mitnehmer weist in der Aussparung einen festen Bolzen auf, auf dem schwenkbar die Raste angebracht ist, die einen festen Raststift aufweist, der mit dem freien Ende in dem Schlitz des Betätigungsringes geführt wird. Weiter weist der Mitnehmer eine Mitnehmereinfassung, in der das Sperrrad gelagert ist, und eine an der Außenfrontwand der Raste angeordnete Öffnung der Arretierungsfeder und eine in der Aussparung angeordnete Öffnung der Rastfeder auf. Das Sperrrad ist im Kunststoff des Trägers eingespritzt.

### Übersicht der Figuren der Zeichnungen

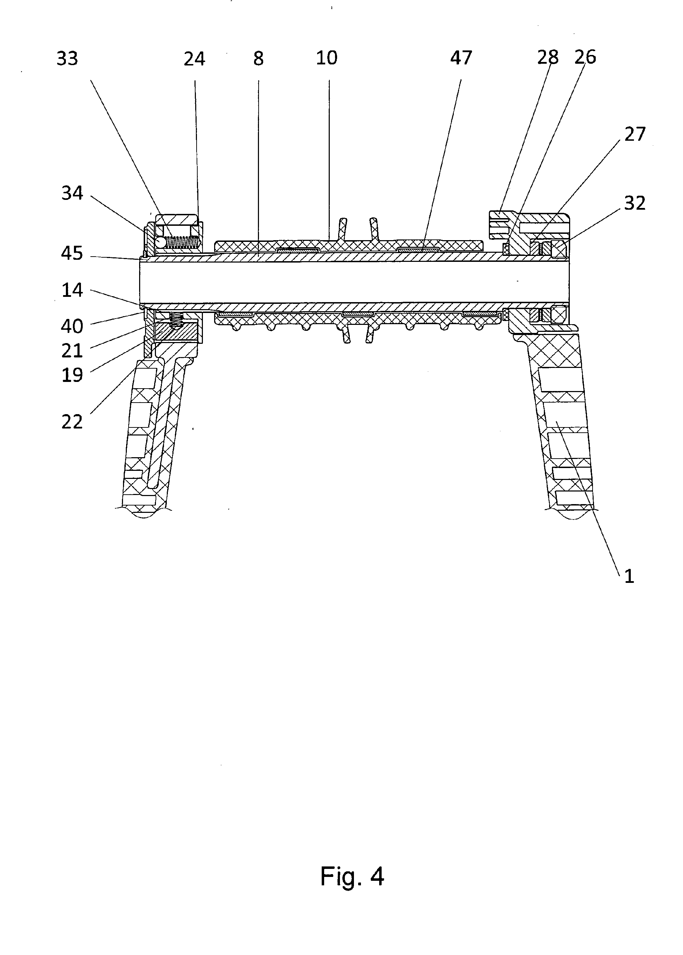

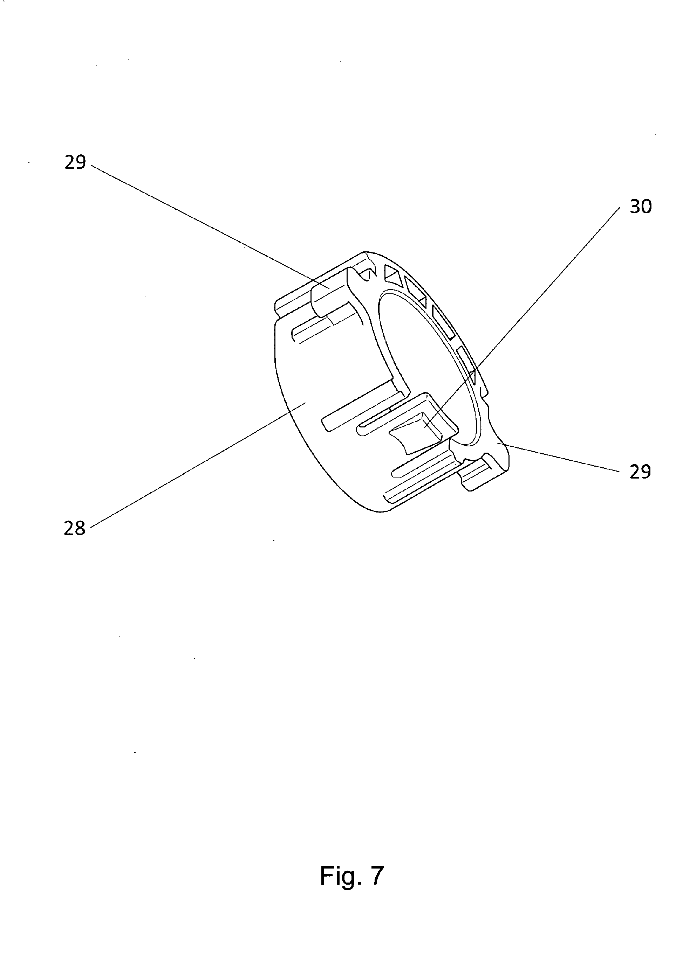

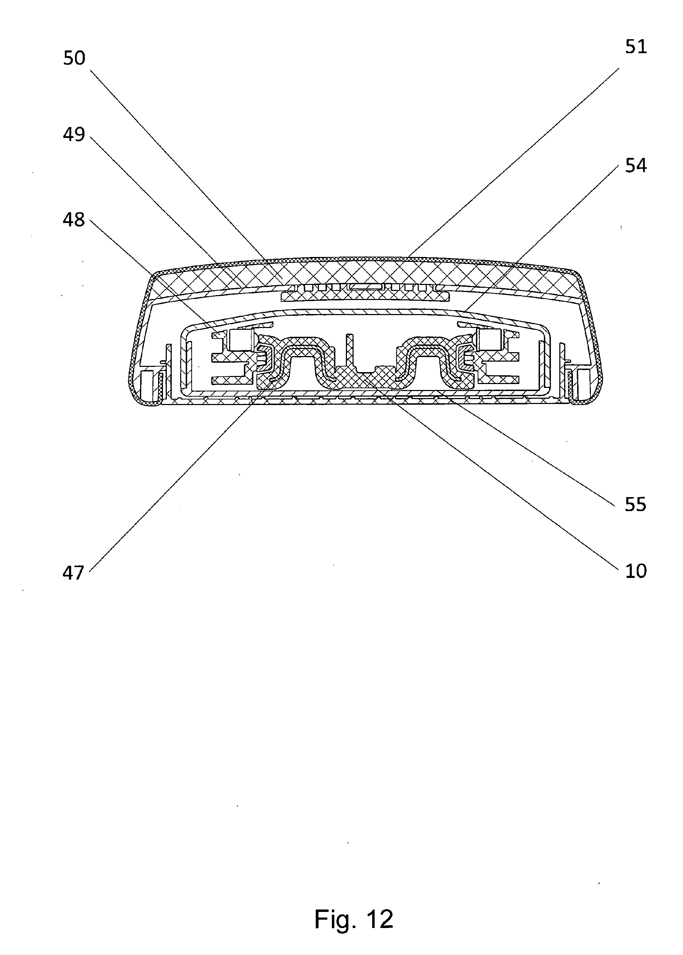

Die Erfindung wird näher anhand der Ausführungsbeispiele gemäß den beigefügten Zeichnungen erläutert, in denen die Fig. 1 eine Axonometrieansicht der verstellbaren Armlehne, Fig. 2 eine Axonometrieansicht der Teile der verstellbaren Armlehne im teilzerlegten Zustand, Fig. 3 eine Axonometrieansicht der Teile der verstellbaren Armlehne im zerlegten Zustand, Fig. 4 die Welle mit dem Arretierungsmechanismus im Schnitt, Fig. 5 eine Axonometrieansicht des Mitnehmers mit der Aussparung und Raste, Fig. 6 eine Axonometrieansicht des Mitnehmers mit der Aussparung und Raste im Teilschnitt, Fig. 7 eine Axonometrieansicht der Buchse, Fig. 8 die Seitenansicht des Arretierungsmechanismus in arretierter Stellung, Fig. 9 die Seitenansicht des Arretierungsmechanismus in der nicht arretierter Stellung, Fig. 10 die Seitenansicht des Arretierungsmechanismus in arretierter Stellung im Schnitt, Fig. 11 die Seitenansicht des Arretierungsmechanismus in nicht arretierter Stellung im Schnitt, Fig. 12 den Polster mit Arm im Schnitt darstellt.

### Ausführungsbeispiel der Erfindung

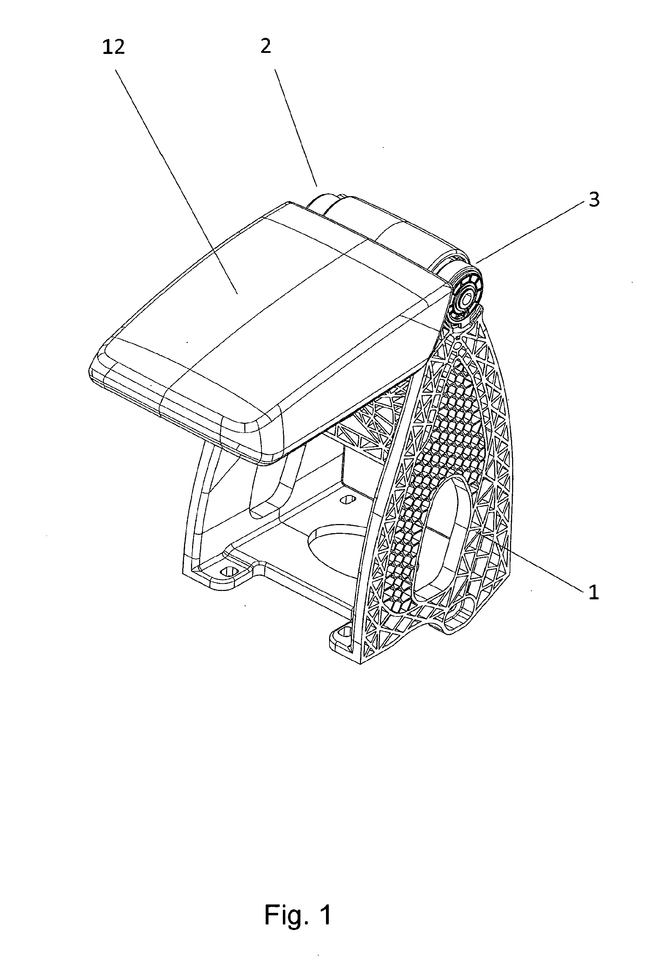

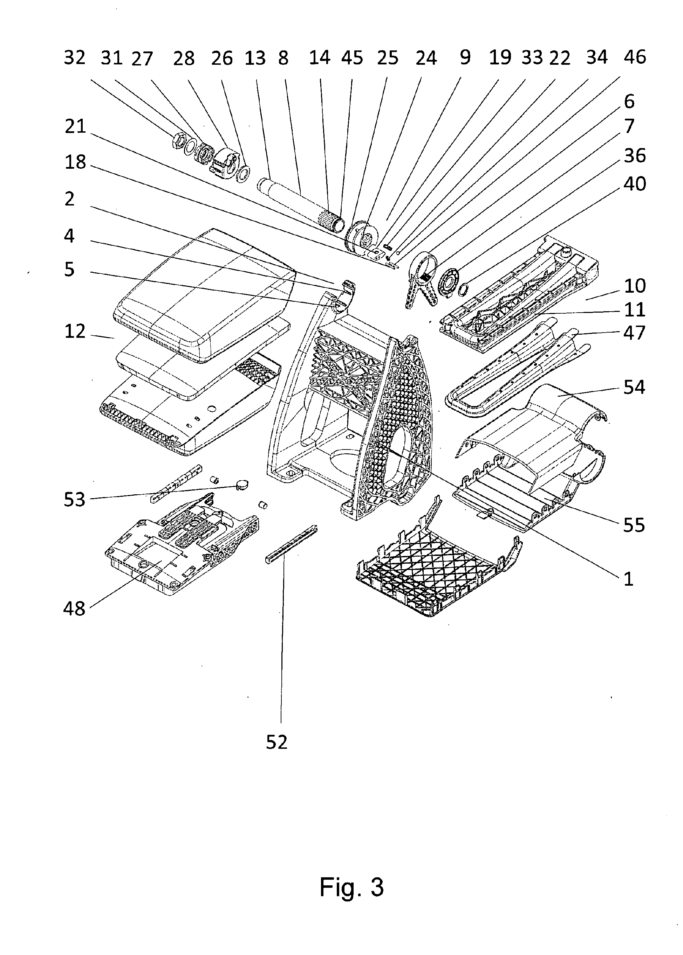

Wie aus der Fig. 1 ersichtlich ist, weist die verstellbare Armlehne einen vorteilhaften kunststoffartigen Träger 1 auf, im dessen oberen Teil eine offene Tragöse 2 und eine geschlossene Tragöse 3 ausgebildet ist. Die geöffnete Tragöse 2 weist ein Paar von gegenüberliegenden Arretierungsschlitze 4 (Fig. 3), und ferner eine Sicherungsaussparung 5 auf. Die geschlossene Tragöse 3 wird durch ein Sperrrad 6 mit der Innenverzahnung 7 gebildet, das während der Fertigung in ein Kunststoffträger 1 eingespritzt wird. In beiden Tragösen 2, 3 ist die Welle 8 mit dem Arretierungsmechanismus 9 gelagert. Auf der Welle 8 ist ein Arm 10 mit Führungsschlitzen 11 befestigt, auf dem verschiebbar der Polster 12 angebracht ist.

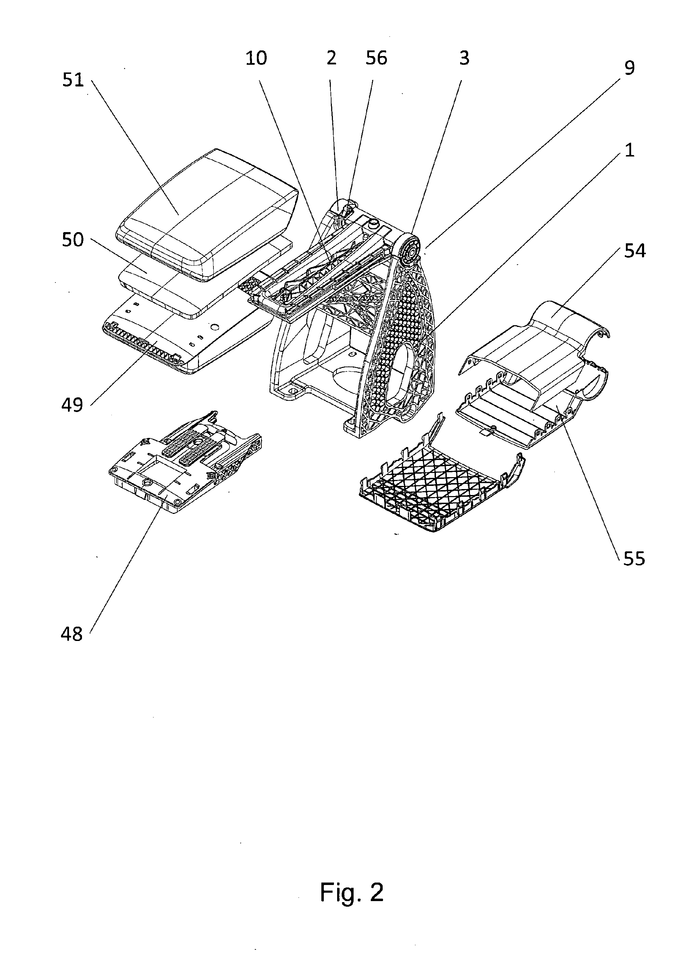

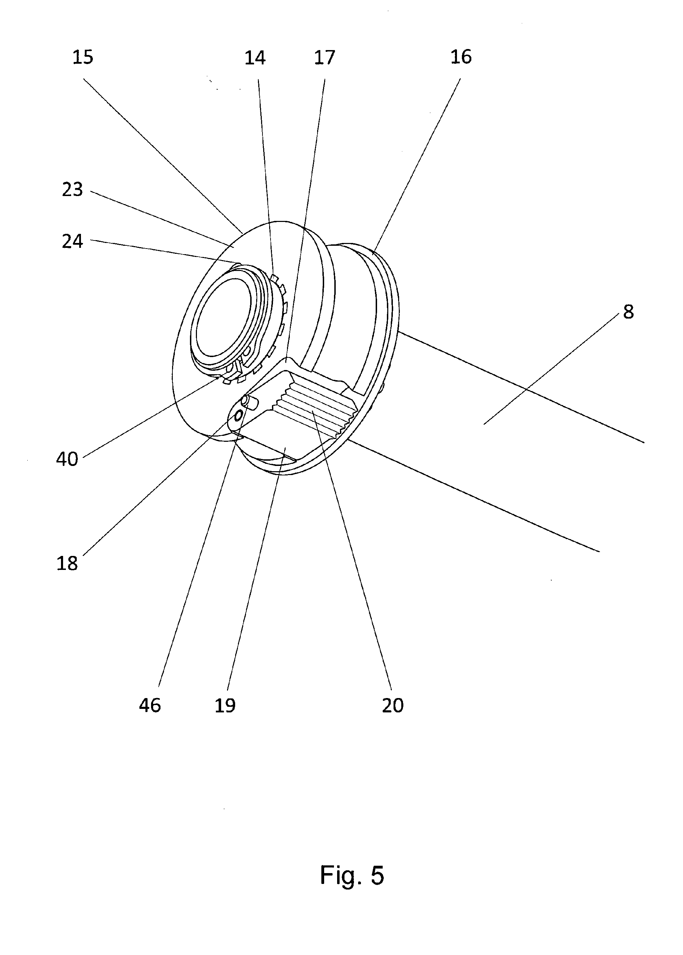

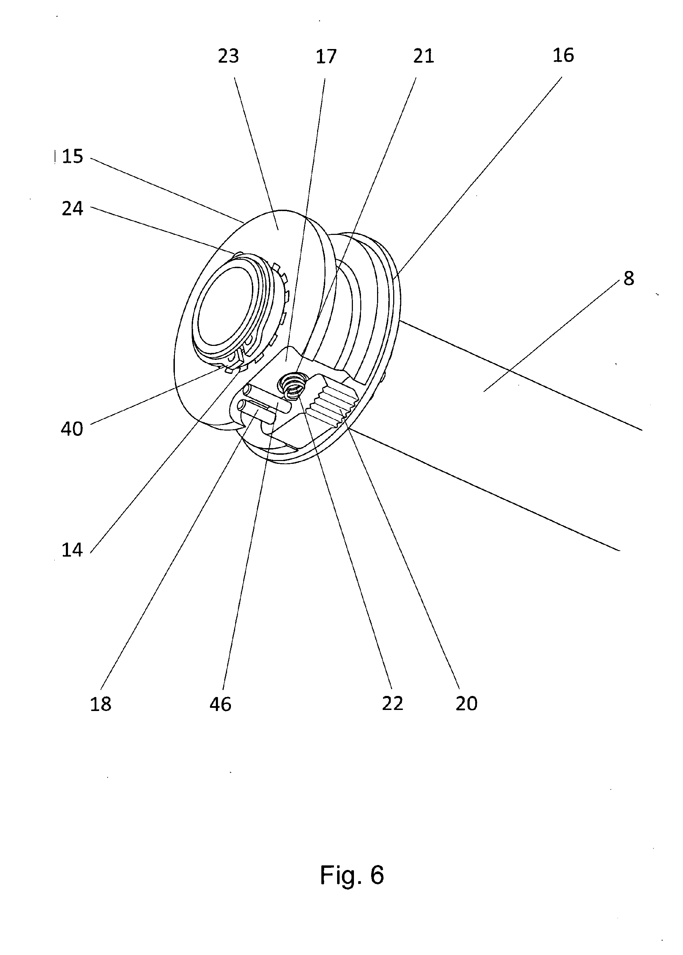

Die Welle 8 weist auf einem Ende eine zylindrische Einfassung 13 mit Gewinde und auf dem zweiten Ende eine gerillte Einfassung 14 auf. Am Ende der gerillten Einfassung 14 ist der Mitnehmer 15 (Fig. 5) angepresst, der eine Einfassung des Mitnehmers 16 und weiter eine Aussparung 17 aufweist, in der am festen Bolzen 18 schwenkbar das Sperrrad 19 mit Außenverzahnung 20 gelagert ist. In der Aussparung 17 (Fig. 6) ist eine Öffnung der Feder der Raste 21 ausgebildet, in der die Rastfeder 22 angeordnet ist, durch welche die Raste 19 radial von der Drehmitte des Polsters 12 in die Innenverzahnung 7 des Sperrrades 6 (Fig. 3) gedrückt wird und an der Außenfrontwand 23 des Mitnehmers 15 eine Öffnung der Arretierungsfeder 24 angeordnet ist. Im zusammengebauten Zustand ist die Welle 8 in der geschlossenen Tragöse 3 so gelagert, dass die Einfassung des Mitnehmers 16 auf den Flansch des Sperrrades 25 aufsetzt. An dem Wellenende, das sich in der offenen Tragöse 2befindet, ist an der zylindrischen Einfassung 13 eine Abstützscheibe 26 aufgesetzt, auf diese Baugruppe wird nachfolgend eine Buchse 28 aufgesetzt, und im Innen der Buchse 28 sind Spreizscheiben 27, der Reibring 31 angeordnet und zum Schluss wird das Reibmechanismus mit einer Mutter 32 abgeschlossen. Die Buchse 28, die zwei gegenüberliegende Arretierungsvorsprünge 29 aufweist, welche in das Paar der gegenüberliegenden Arretierungsschlitze 4 einsinken und einen Sicherungsclip 30, mit dem die Buchse 28 in der Sicherungsaussparung 5 eingeclipst ist, wodurch die Arretierung der Welle 8 in axialer Richtung gesichert ist. Die Buchse 26 weist eine Nockeneinfassung 56 (Fig. 2) auf. Die ist so ausgestaltet, damit sie einen Vorschub des Polsters 12 in dem oberen Totpunkt ermöglicht und eine Kollision des hinteren Polsterteils mit den Teilen des Hinterteils der Mittelkonsole vermeidet.

Auf dem Mitnehmer 15 ist in der Öffnung der Arretierungsfeder 24 eine Arretierungsfeder 33 und Arretierungskugel 34 eingesetzt. An die Außenfrontwand 23 des Mitnehmers 15 setzt der Betätigungsring 36 mit einem Schlitz 37 und einer Betätigungsnase 38 auf. Die Betätigungsnase 38 des Betätigungsrings 36 bewegt sich in der Winkelaussparung 39, die im Kunststoffträger 1 ausgebildet und durch die vorderer Endfläche 41 und hintere Endfläche 42 abgegrenzt ist. Der Schlitz 37 des Betätigungsrings 36 wird durch eine Radialnut 43 und einen schrägen Anlauf 44 gebildet. Der Betätigungsring 36 ist auf dem zylindrischen Teil der Welle 45 aufgesetzt, in derer Nut ein Sicherungsring 40 ist, der den Betätigungsring 36 festhält. In der Raste 19 ist weiter ein Raststift 46 fest gelagert, der mit seinem zweiten Ende in dem Schlitz 37 des Betätigungsrings 36 geführt wird.

Auf der Welle 8 ist ferner eine Metallstrebe 47 befestigt. Die Metallstrebe 47 bildet mit der Welle 8 und dem befestigten Mitnehmer 15 eine Schweißgruppe, die nach Zusammenbau in den Kunststoffarm 10 eingespritzt wird, in dem Führungsnuten 11 ausgebildet sind. In denen ist verschiebbar der Polster 12 gelagert, der einen verschiebbaren Tragteil 48, Polsterträger 49 und die Schaumfüllung 50 mit Bezug 51 (Fig.2) umfasst. Der verschiebbare Tragteil 48 weist gegenüberliegende Gleitsegmente 52 und eine Silikonbremse 53 auf. Der Arm 10 weist weiter einen Ober- und Unterdeckel 54, 55 auf.

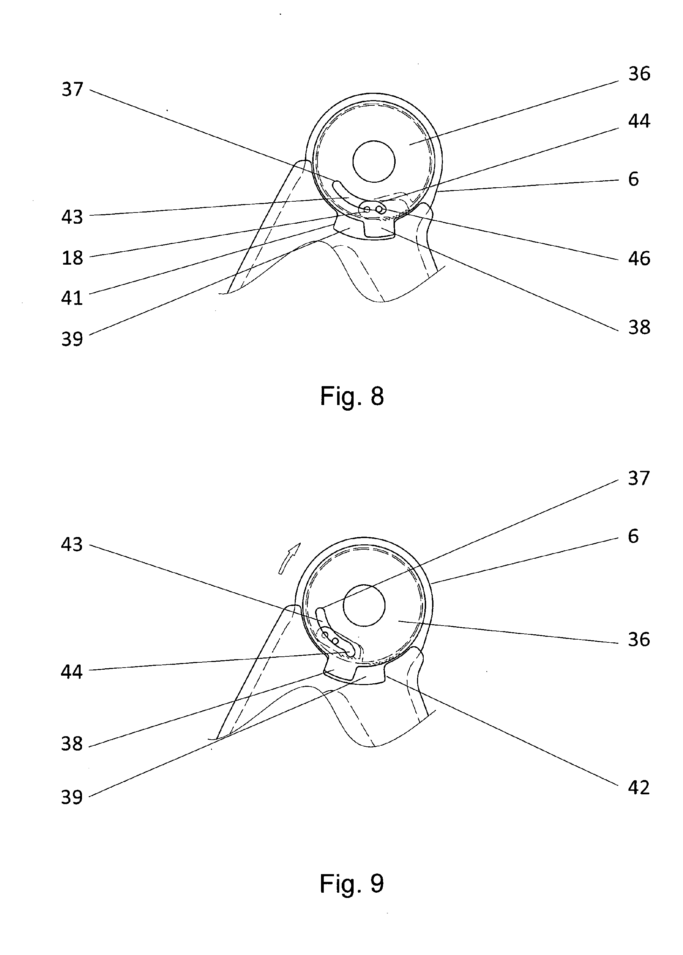

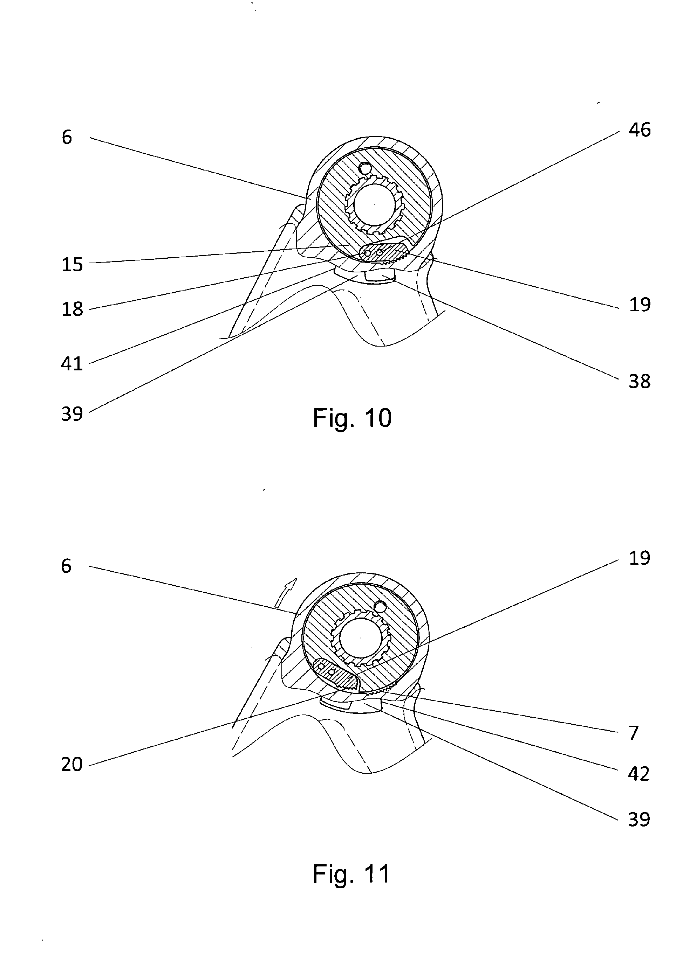

Die verstellbare Armlehne weist mindestens vier höhenarretierte Stellungen des Polsters 12 auf und dem entspricht die Anzahl der Zähne des Sperrradmechanismus. Zur Arretierung dient das Arretierungsmechanismus 9, dessen Funktion aus den Fig. 8, 9, 10 und 11 zu entnehmen ist. Bei einer Winkelverschwenkung des Polsters 12 wird die Raste 19 mitgenommen. Bei einer Winkelverschwenkung, die größer als die Zahnweite ist, kommt es dazu, dass die Zähne der Außenverzahnung 20 der Raste 19 in die nächste Zahnlücke der Innenverzahnung 7 des Sperrrades 6 eingreifen. Die Sperrung des Arretierungsmechanismus 9 erfolgt nach der letzten Höhenarretierungsstellung, wenn zur Verschwenkung bzw. zum Abdrücken der Raste 19 durch den Anlauf des Raststiftes 46 auf den schrägen Anlauf 44 der Radialnut 43 kommt, was durch die Anhaltung des Betätigungsrings 36 verursacht ist, dessen Betätigungsnase 38 sich an die vordere Endfläche 41 in der Winkelaussparung 39 des Kunststoffträgers 1 vor dem oberen Totpunkt der verstellbaren Armlehne abstützt. Bei der Bewegung des Armes 10 mit dem Polster 12 zum unteren Totpunkt wird durch die Radialkraft, die durch den Druck der Arretierungsfeder 33 auf die Arretierungskugel 34 erzeugt wird, der Betätigungsring 36 mitgenommen, in dem mit dem Raststift 46 die Raste 19 in Stellung ist, wo sie mit einem Spielraum an der Innenverzahnung 7 des Sperrrades 6 vorbeiläuft. Erst vor dem unteren Totpunkt wird der Betätigungsring 36 angehalten und die Raste 19 mit dem Raststift 46 im schrägen Anlauf 44 der Radialnut 43 in die Stellung positioniert wird, wo bei wiederholter Bewegung des Armes 10 mit dem Polster 12 nach oben zum Eindrücken seiner Außenverzahnung 20 durch die Rastfeder 22 in die Innenverzahnung 7 des Sperrrades 6 erfolgt.

### Bezugszeichenliste

- 1: Kunststoffträger
- 2: offene Tragöse
- 3: geschlossen Tragöse
- 4: Arretierungsschlitz
- 5: Sicherungsaussparung
- 6: Sperrrad
- 7: Innenverzahnung

- 8: Welle
- 9: Arretierungsmechanismus
- 10: Arm
- 11: Führungsnut
- 12: Polster
- 13: Zylindrische Einfassung
- 14: Gerillte Einfassung
- 15: Mitnehmer
- 16: Einfassung des Mitnehmers
- 17: Aussparung
- 18: fester Bolzen
- 19: Raste
- 20: Außenverzahnung
- 21: Öffnung der Rastfeder
- 22: Rastfeder
- 23: Außenfrontwand
- 24: Öffnung der Arretierungsfeder
- 25: Flansch des Sperrrades
- 26: Abstützscheibe
- 27: Spreizscheibe
- 28: Buchse
- 29: Arretierungsvorsprung

- 30: Sicherungsclip
- 31: Reibring
- 32: Mutter
- 33: Arretierungsfeder
- 34: Arretierungskugel
- 35: Außenfrontwand
- 36: Betätigungsring
- 37: Schlitz
- 38: Betätigungsnase
- 39: Winkelaussparung
- 40: Sicherungsring
- 41: vordere Endfläche
- 42: hintere Endfläche
- 43: Radialnut
- 44: schräger Anlauf
- 45: zylindrischer Wellenteil
- 46: Raststift
- 47: Metallstrebe
- 48: verschiebbarer Tragteil
- 49: Polsterträger
- 50: Schaumfüllung
- 51: Bezug

- 52: Gleitsegment
- 53: Silikonbremse
- 54: Oberdeckel
- 55: Unterdeckel
- 56: Nockeneinfassung
- 57: Betätigungsdorn

## Patentansprüche

1. Verstellbare Armlehne, die einen Träger (1) mit offener Tragöse (2) und geschlossener Tragöse (3) aufweist, in denen schwenkbar eine Welle (8) mit Arretierungsmechanismus (9) gelagert ist, wobei an der Welle (8) ein Arm (10) mit verschiebbar gelagertem Polster (12) angebracht ist, **dadurch gekennzeichnet, dass** das Arretierungsmechanismus (9) einen Mitnehmer (15) umfasst, der fest mit der Welle (8) verbunden ist, wo der Mitnehmer schwenkbar in einem Sperrrad (6) mit- Innenverzahnung (7) gelagert ist, zu dem ein drehbar gelagerter Betätigungsring (36) anliegt, wobei der Mitnehmer (15) eine Aussparung (17) aufweist, in dem schwenkbar eine Raste (19) mit Außenverzahnung (20) angeordnet ist.

2. Verstellbare Armlehne nach Anspruch 1 **dadurchgekennzeichnet, dass** der Betätigungsring (36) eine Betätigungsnase (38) und einen Schlitz (37) aufweist.

3. Verstellbare Armlehne nach Anspruch 2 **dadurch gekennzeichnet, dass** der Schlitz (37) durch eine Radialnut (43) und einen schrägen Anlauf (44) gebildet wird.

4. Verstellbare Armlehne nach Anspruch 1 **dadurch gekennzeichnet, dass** der Träger (1) eine Winkelaussparung (39) aufweist, die durch die vordere Endfläche (41) und hintere Endfläche (42) angegrenzt ist.

5. Verstellbare Armlehne nach Anspruch 1 **dadurch gekennzeichnet, dass** der Mitnehmer (15) in der Aussparung (17) einen festen Bolzen (18) aufweist, an dem schwenkbar eine Raste (19) gelagert ist.

6. Verstellbare Armlehne nach Anspruch 1 **dadurch gekennzeichnet, dass** die Raste (19) einen festen Raststift (46) aufweist, der mit dem freien Ende in dem Schlitz (37) des Betätigungsrings (36) geführt wird.

7. Verstellbare Armlehne nach Anspruch 1 **dadurch gekennzeichnet, dass** der Mitnehmer (15) eine Einfassung des Mitnehmers (16) aufweist, in der das Sperrrad (6) gelagert ist.

8. Verstellbare Armlehne nach Anspruch 1 **dadurch gekennzeichnet**
**dass** der Mitnehmer (15) eine Öffnung der Arretierungsfeder (24) aufweist, die an der Außenfrontwand (23) angeordnet ist und eine in der Aussparung (17) angeordnete Öffnung der Rastfeder (21).

9. Verstellbare Armlehne nach Anspruch 1 **dadurch gekennzeichnet, dass** das Sperrrad (6) im Kunststoffträger (1) eingespritzt ist.
